(19)

Europäisches Patentamt
European Patent Office
Office européen des brevets

(11) **EP 4 474 247 A1**

(12) **EUROPEAN PATENT APPLICATION**
published in accordance with Art. 153(4) EPC

(43) Date of publication:
**11.12.2024 Bulletin 2024/50**

(21) Application number: **22924794.5**

(22) Date of filing: **03.02.2022**

(51) International Patent Classification (IPC):
***B62D 6/00*** *(2006.01)*        ***B62D 5/04*** *(2006.01)*

(52) Cooperative Patent Classification (CPC):
**B62D 15/0205; B62D 5/04; B62D 6/00;**
**B62D 6/008; B62D 15/025**

(86) International application number:
**PCT/JP2022/004259**

(87) International publication number:
**WO 2023/148883 (10.08.2023 Gazette 2023/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **JTEKT Corporation
Kariya-shi, Aichi 448-8652 (JP)**

(72) Inventor: **KODERA, Takashi
Kariya-shi, Aichi 448-8652 (JP)**

(74) Representative: **Winter, Brandl - Partnerschaft
mbB
Alois-Steinecker-Straße 22
85354 Freising (DE)**

(54) **STEERING CONTROL DEVICE AND STEERING CONTROL METHOD**

(57)     A steering control device (70) is configured to execute a torque control process, a feedback amount calculation process, and an automatic control calculation process. The torque control process is a process of controlling torque of the motor according to a value of a required torque variable. The required torque variable is a variable that indicates a target value for the torque of the motor. The feedback amount calculation process is a process of calculating a value of the required torque variable in order to control steering torque to target steering torque through feedback control.

Fig.2

**Description**

TECHNICAL FIELD

The present disclosure relates to a steering control device and a steering control method.

BACKGROUND ART

Patent Document 1 mentioned below describes a control device that executes feedback control in order to control steering torque, as torque to be applied to a steering wheel, to a target value, for example.

Related Art Documents

Patent Documents

Patent Document 1: Japanese Unexamined Patent Application Publication No. 2014-223832 (JP 2014-223832 A)

SUMMARY OF THE INVENTION

Problem to be Solved by the Invention

However, the above device cannot optimize the behavior of the steering wheel when a driver is not operating the steering wheel.

Means for Solving the Problem

An aspect of the present disclosure provides a steering control device configured to operate a motor mechanically coupled to an operation member that is operated by a driver to steer a vehicle. The steering control device is configured to execute a torque control process, a feedback amount calculation process, and an automatic control calculation process. The torque control process is a process of controlling torque of the motor according to a value of a required torque variable. The required torque variable is a variable that indicates the torque of the motor. The feedback amount calculation process is a process of calculating a value of the required torque variable in order to control steering torque to target steering torque through feedback control. The steering torque is torque to be input to the operation member. The automatic control calculation process is a process of calculating a value of the required torque variable for displacing the operation member separately from an operation of the operation member by the driver.

Another aspect of the present disclosure provides a steering control method of operating a motor mechanically coupled to an operation member that is operated by a driver to steer a vehicle. The steering control method includes executing a torque control process, executing a feedback amount calculation process, and executing an automatic control calculation process.

The torque control process is a process of controlling torque of the motor according to a value of a required torque variable. The required torque variable is a variable that indicates the torque of the motor. The feedback amount calculation process is a process of calculating a value of the required torque variable in order to control steering torque to target steering torque through feedback control. The steering torque is torque to be input to the operation member. The automatic control calculation process is a process of calculating a value of the required torque variable for displacing the operation member separately from an operation of the operation member by the driver.

BRIEF DESCRIPTION OF THE DRAWINGS

[FIG. 1] FIG. 1 illustrates the configuration of a steering system and a control device according to a first embodiment.
[FIG. 2] FIG. 2 is a block diagram illustrating a process executed by the control device illustrated in FIG. 1.
[FIG. 3] FIG. 3 is a block diagram illustrating a process executed by a control device according to a second embodiment.
[FIG. 4] FIG. 4 is a block diagram illustrating a process executed by a control device according to a third embodiment.
[FIG. 5] FIG. 5 is a block diagram illustrating a process executed by a control device according to a fourth embodiment.
[FIG. 6] FIG. 6 is a block diagram illustrating a process executed by a control device according to a fifth embodiment.
[FIG. 7] FIG. 7 is a block diagram illustrating a process executed by a control device according to a sixth embodiment.
[FIG. 8] FIG. 8 is a block diagram illustrating a process executed by a control device according to a seventh embodiment.
[FIG. 9] FIG. 9 is a block diagram illustrating a process executed by a control device according to an eighth embodiment.
[FIG. 10] FIG. 10 is a block diagram illustrating a process executed by a control device according to a ninth embodiment.
[FIG. 11] FIG. 11 is a block diagram illustrating a process executed by a control device according to a tenth embodiment.
[FIG. 12] FIG. 12 is a block diagram illustrating a process executed by a control device according to an eleventh embodiment.

MODES FOR CARRYING OUT THE INVENTION

<First Embodiment>

A steering control device according to a first embodiment will be described below with reference to the drawings.

[Prerequisite Configuration]

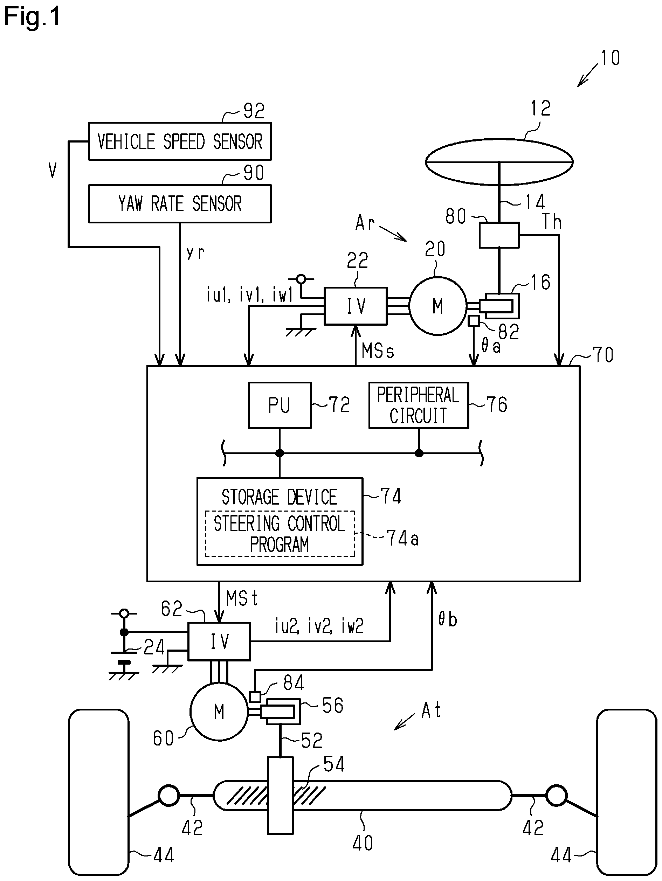

As illustrated in FIG. 1, a steering system 10 of a vehicle includes a reaction force actuator Ar and a steering actuator At. In the steering system 10 according to the present embodiment, a power transfer path between a steering wheel 12 and steered wheels 44 is mechanically disconnected. That is, the steering system 10 includes a steer-by-wire steering device.

A steering shaft 14 is coupled to the steering wheel 12. The reaction force actuator Ar is an actuator that applies a steering reaction force to the steering wheel 12. The steering reaction force refers to a force that acts in a direction opposite to the direction in which the steering wheel 12 is operated by a driver. A suitable hand response can be given to the driver by applying a steering reaction force to the steering wheel 12. The reaction force actuator Ar includes a speed reduction mechanism 16, a reaction force motor 20, and a reaction force inverter 22.

The reaction force motor 20 is a three-phase brushless motor. A rotary shaft of the reaction force motor 20 is coupled to the steering shaft 14 via the speed reduction mechanism 16. The reaction force inverter 22 is a power conversion circuit that converts a voltage of a battery 24, as a direct-current voltage source, into an alternating-current voltage and applies the resulting voltage to the reaction force motor 20.

A steered shaft 40 extends along the vehicle width direction as the right-left direction in FIG. 1. Right and left steered wheels 44 are coupled to both ends of the steered shaft 40 via respective tie rods 42. Linear motion of the steered shaft 40 changes the steered angle of the steered wheels 44.

The steering actuator At includes a speed reduction mechanism 56, a steering motor 60, and a steering inverter 62. The steering motor 60 is a three-phase brushless motor. A rotary shaft of the steering motor 60 is coupled to a pinion shaft 52 via the speed reduction mechanism 56. Pinion teeth of the pinion shaft 52 are meshed with rack teeth 54 of the steered shaft 40. The pinion shaft 52 and the steered shaft 40 provided with the rack teeth 54 constitute a rack and pinion mechanism. Torque of the steering motor 60 is applied as a steering force to the steered shaft 40 via the pinion shaft 52. As the steering motor 60 is rotated, the steered shaft 40 is moved along the vehicle width direction as the right-left direction in FIG. 1.

The steering system 10 includes a control device 70. The control device 70 controls the steering device. More specifically, the control device 70 controls the steering wheel 12 of the steering device. The control device 70 operates the reaction force actuator Ar in order to control the steering reaction force as a control amount to be controlled. In FIG. 1, an operation signal MSs for the reaction force inverter 22 is indicated. The control device 70 also controls the steered wheels 44 of the steering device. The control device 70 operates the steering actuator At in order to control the steered angle of the steered wheels 44 as a control amount to be controlled. In FIG. 1, an operation signal MSt for the steering inverter 62 is indicated.

The control device 70 references steering torque Th, as torque input to the steering shaft 14, detected by a torque sensor 80 in order to control a control amount. The torque sensor 80 includes a torsion bar coupled to the steering shaft 14 and a sensing element that detects the torsion angle of the torsion bar. The control device 70 also references a rotational angle $\theta a$ of the rotary shaft of the reaction force motor 20 detected by a rotational angle sensor 82. The control device 70 also references currents iu1, iv1, iw1 that flow through the reaction force motor 20. The currents iu1, iv1, iw1 are quantified as voltage drops across shunt resistors provided in respective legs of the reaction force inverter 22. The control device 70 references a rotational angle $\theta b$ of the rotary shaft of the steering motor 60 detected by a rotational angle sensor 84 in order to control a control amount. The control device 70 also references currents iu2, iv2, iw2 that flow through the steering motor 60. The currents iu2, iv2, iw2 are quantified as voltage drops across shunt resistors provided in respective legs of the steering inverter 62. The control device 70 also references a yaw rate yr detected by a yaw rate sensor 90. The control device 70 also references a vehicle speed V detected by a vehicle speed sensor 92.

The control device 70 includes a PU 72, a storage device 74, and a peripheral circuit 76. The PU 72 is a software processing device such as a CPU, a GPU, and a TPU. The storage device 74 includes a storage medium such as a non-volatile memory that is electrically rewritable and a disk medium. The storage device 74 stores a steering control program 74a. The peripheral circuit 76 includes a circuit that generates a clock signal that prescribes internal operation, a power supply circuit, a reset circuit, etc. The control device 70 controls the control amounts by the PU 72 executing the steering control program 74a stored in the storage device 74.

[Control]

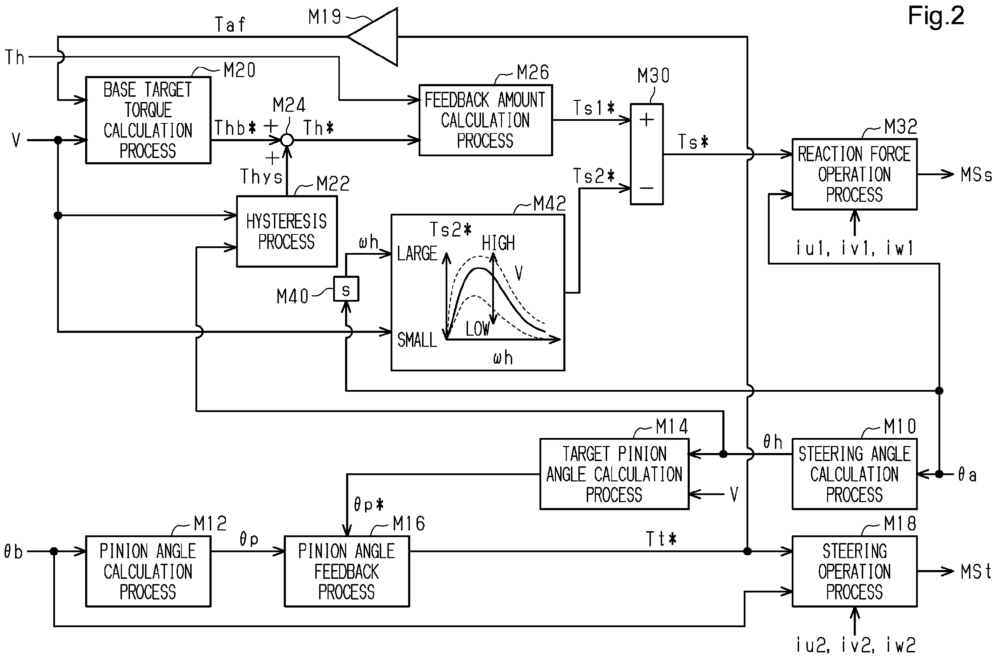

FIG. 2 illustrates a part of a process executed by the control device 70. A steering angle calculation process M10 is a process of calculating a steering angle $\theta h$, as the rotational angle of the steering wheel 12, using the rotational angle $\theta a$ as an input. The steering angle calculation process M10 includes a process of converting the rotational angle $\theta a$ into an integrated angle including a range exceeding 360°, by counting the number of revolutions of the reaction force motor 20 from a neutral steering position as the position of the steering wheel 12 at the time when the vehicle is traveling straight, for example. The steering angle calculation process M10 includes a process of computing the steering angle $\theta h$ by multiplying the integrated angle obtained through the conversion by a conversion coefficient based on the rotational speed ratio of the speed reduction mechanism 16. The steering angle $\theta h$ is positive when indicating an angle on the right side with respect to the neutral steering position, and is negative when indicating an angle on the left side, for example.

A pinion angle calculation process M12 is a process of calculating a pinion angle $\theta p$, as the rotational angle of the pinion shaft 52, using the rotational angle $\theta b$ as an input. The pinion angle calculation process M12 includes a process of converting the rotational angle $\theta b$ into an integrated angle including a range exceeding 360°, by counting the number of revolutions of the steering motor 60 from a neutral rack position as the position of the steered shaft 40 at the time when the vehicle is traveling straight, for example. The pinion angle calculation process M12 includes a process of computing the pinion angle $\theta p$ as the actual rotational angle of the pinion shaft 52, by multiplying the integrated angle obtained through the conversion by a conversion coefficient based on the rotational speed ratio of the speed reduction mechanism 56. The pinion angle $\theta p$ is positive when indicating an angle on the right side with respect to the neutral rack position, and is negative when indicating an angle on the left side, for example. The steering motor 60 and the pinion shaft 52 operate in conjunction with each other via the speed reduction mechanism 56. Therefore, there is a one-to-one correspondence between an integrated value of the rotational angle $\theta b$ of the steering motor 60 and the pinion angle $\theta p$. The pinion angle $\theta p$ can be obtained from the rotational angle $\theta b$ of the steering motor 60 using this correspondence. The pinion shaft 52 is meshed with the steered shaft 40. Therefore, there is also a one-to-one correspondence between the pinion angle $\theta p$ and the amount of movement of the steered shaft 40. Thus, there is also a one-to-one correspondence between the pinion angle $\theta p$ and the steered angle of the steered wheels 44.

A target pinion angle calculation process M14 is a process of calculating a target pinion angle $\theta p^*$ using the steering angle $\theta h$ and the vehicle speed V as inputs. The target pinion angle $\theta p^*$ is a target value for the pinion angle $\theta p$ that matches an operation of the steering wheel 12 by the driver. The target pinion angle calculation process M14 includes a process of variably setting a steering angle ratio Dr according to the vehicle speed V. Therefore, the target pinion angle $\theta p^*$ output from the target pinion angle calculation process M14 has different values according to the vehicle speed V, even if the input steering angle $\theta h$ is the same.

A pinion angle feedback process M16 is a process of calculating a steering torque instruction value Tt*, as an instruction value for torque of the steering motor 60, in order to control the pinion angle $\theta p$ to the target pinion angle $\theta p^*$ through feedback control.

A steering operation process M18 is a process of outputting the operation signal MSt for the steering inverter 62 using the steering torque instruction value Tt*, the currents iu2, iv2, iw2, and the rotational angle $\theta b$ as inputs. The steering operation process M18 includes a process of calculating dq-axis current instruction values based on the steering torque instruction value Tt*. The steering operation process M18 also includes a process of calculating dq-axis currents based on the currents iu2, iv2, iw2 and the rotational angle $\theta b$. The steering operation process M18 further includes a process of calculating the operation signal MSt in order to operate the steering inverter 62 such that the dq-axis currents are brought to the instruction values.

An axial force calculation process M19 includes a process of calculating an axial force Taf using the steering torque instruction value Tt* as an input. Here, the axial force Taf is a force in the axial direction applied to the steered shaft 40. A base target torque calculation process M20 is a process of calculating base target torque Thb*, as a base value of target steering torque Th* to be input to the steering shaft 14 by the driver via the steering wheel 12, based on the axial force Taf. Here, the axial force Taf is a force in the axial direction applied to the steered shaft 40. The axial force Taf is a quantity that matches a lateral force that acts on the steered wheels 44, and thus the lateral force can be grasped based on the axial force Taf. Meanwhile, it is desirable that torque to be input to the steering shaft 14 by the driver via the steering wheel 12 should be determined according to the lateral force. Thus, the base target torque calculation process M20 is a process of calculating base target torque Thb* according to the lateral force grasped from the axial force Taf.

More specifically, the base target torque calculation process M20 includes a process of variably setting the absolute value of the base target torque Thb* according to the absolute value of the axial force Taf. This process may be a process of calculating the absolute value of the base target torque Thb* at a low vehicle speed V so as to be equal to or less than the absolute value of the base target torque Thb* at a high vehicle speed V, even if the absolute value of the axial force Taf is the same. This can be implemented through map calculation of the base target torque Thb* performed by the PU 72 with map data stored in advance in the storage device 74. The map data have the axial force Taf or a lateral acceleration grasped from the axial force Taf and the vehicle speed V as input variables, and have the base target torque Thb* as an output variable.

The map data are a set of data that include discrete values of the input variables and values of the output variable corresponding to the values of the input variables. Further, the map calculation may be a process in which when the values of the input variables match any of the values of the input variable of the map data, the corresponding value of the output variable of the map data is used as the calculation result. In addition, the map calculation may be a process in which when the values of the input variables do not match any of the values of input variable of the map data, a value obtained by interpolating a plurality of values of the output variable included in the map data is used as the calculation result. Alternatively, the map calculation may be a process in which when the values of the input variables do not match any of the values of input variable of the map data, a value of the output variable of the map data corresponding to the closest value among a plurality of values of the output variable included in the map data is used as the calculation result.

A hysteresis process M22 is a process of calculating and outputting a hysteresis correction amount Thys for correcting the base target torque Thb* based on the steering angle θh. More specifically, the hysteresis process M22 includes a process of calculating the hysteresis correction amount Thys by identifying forward turning and backward turning of the steering wheel 12 based on variations in the steering angle θh etc. More specifically, the hysteresis process M22 includes a process of calculating the hysteresis correction amount Thys so as to render the absolute value of the target steering torque Th* large during forward turning compared to that during backward turning. The hysteresis process M22 includes a process of variably setting the hysteresis correction amount Thys according to the vehicle speed V.

An addition process M24 is a process of calculating the target steering torque Th* by adding the hysteresis correction amount Thys to the base target torque Thb*. A feedback amount calculation process M26 is a process of calculating a target reaction force Ts1* that matches the steering reaction force to be applied to the steering wheel 12, as an amount of operation required to control the steering torque Th to the target steering torque Th* through feedback control. The target reaction force Ts1* is actually an instruction value for the reaction force motor 20. The steering reaction force is obtained by multiplying the target reaction force Ts1* by a coefficient that matches the speed reduction ratio of the speed reduction mechanism 16.

A linear operator M40 is a process of calculating a first-order time differential value of the rotational angle θa and substituting the calculated value into a steering angular speed ωh. A damping process M42 is a process of calculating a target reaction force Ts2* according to the steering angular speed ωh and the vehicle speed V. The damping process M42 may be a process in which the PU 72 calculates the target reaction force Ts* through map calculation with map data stored in the storage device 74. Here, the map data have the steering angular speed ωh and the vehicle speed V as input variables, and have the target reaction force Ts2* as an output variable.

A synthesized value calculation process M30 is a process of calculating the target reaction force Ts* by subtracting the target reaction force Ts2* from the target reaction force Ts1*. A reaction force operation process M32 is a process of outputting the operation signal MSs for the reaction force inverter 22 using the target reaction force Ts*, the currents iu1, iv1, iw1, and the rotational angle θa as inputs. The reaction force operation process M32 includes a process of calculating dq-axis current instruction values based on the target reaction force Ts*. The reaction force operation process M32 also includes a process of calculating dq-axis currents based on the currents iu1, iv1, iw1 and the rotational angle θa. The reaction force operation process M32 further includes a process of calculating the operation signal MSs in order to operate the reaction force inverter 22 such that the dq-axis currents are brought to the instruction values.

<Functions and Effects of Present Embodiment>

The PU 72 determines the target reaction force Ts* as a value obtained by subtracting the target reaction force Ts2* from the target reaction force Ts1*. Then, the PU 72 controls torque of the reaction force motor 20 to the target reaction force Ts*. Here, the target reaction force Ts1* is an amount of operation for controlling the steering torque Th to the target steering torque Th* through feedback control. When the driver takes his/her hands off the steering wheel 12, for example, a reaction force cannot be applied to the driver via the steering wheel 12 in the first place, and thus the target reaction force Ts1* is not necessarily a value that is appropriate as torque to be applied to the steering wheel 12.

Thus, the PU 72 determines the target reaction force Ts* as a value obtained by subtracting the target reaction force Ts2* output from the damping process M42 from the target reaction force Ts1* output from the feedback amount calculation process M26. Therefore, the rotational speed of the steering wheel 12 is corrected using the target reaction force Ts2*, even if the target reaction force Ts1* is no longer a value that is appropriate as torque to be applied to the steering wheel 12 as the driver takes his/her hands off the steering wheel 12. That is, when the steering wheel 12 is displaced according to the target reaction force Ts1*, the PU 72 determines the target reaction force Ts* as a value obtained by subtracting the target reaction force Ts2* that matches the steering angular speed ωh from the target reaction force Ts1*. Consequently, the behavior of the steering wheel can be rendered appropriate, even when the driver takes his/her hands off the steering wheel.

With the present embodiment described above, the following functions and effects can be further obtained.
(1-1) The PU 72 calculates the base target torque Thb* according to the vehicle speed V. That is, the PU 72 calculates the target steering torque Th* according to the vehicle speed V. Meanwhile, the PU 72 calculates the target reaction force Ts2* according to the vehicle speed V. Therefore, the target reaction force Ts2* can be set to an appropriate value that matches the vehicle speed V as a variable that is used to calculate the target steering torque Th*.

(1-2) The PU 72 operates the reaction force motor 20 with power transfer between the steering wheel 12 and the steered wheels 44 disconnected. In that case, no load on the steered wheels 44 side acts on the steering wheel 12, and thus torque of the reaction force motor 20 significantly affects the behavior of the steering wheel 12 when the driver takes his/her hands off the steering wheel 12. Therefore, the target reaction force Ts2* is particularly useful.

<Second Embodiment>

A second embodiment will be described below with reference to the drawings, focusing on the differences from the first embodiment.

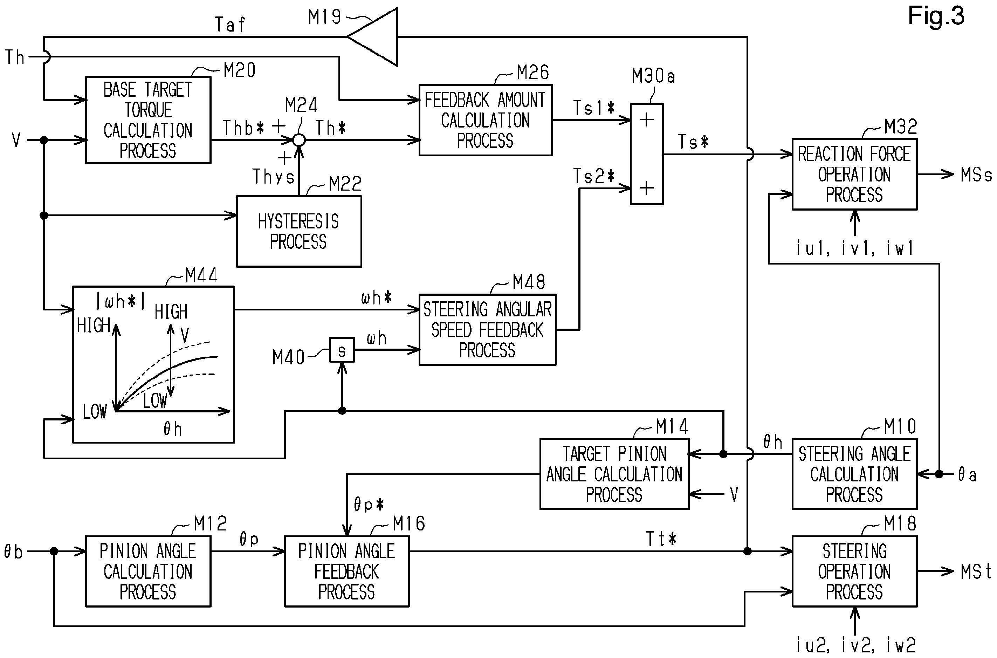

FIG. 3 illustrates a part of a process executed by the control device 70. In FIG. 3, the same reference numerals are given to processes corresponding to the processes illustrated in FIG. 2 for convenience. A target steering angular speed calculation process M44 is a process of calculating a target steering angular speed ωh* according to the magnitude of the steering angle θh and the vehicle speed V. The target steering angular speed calculation process M44 may be a process of rendering the magnitude of the target steering angular speed ωh* at the time when the magnitude of the steering angle θh is large equal to or more than the magnitude of the target steering angular speed ωh* at the time when the magnitude of the steering angle θh is small, for example. In that case, there exist a first angle θh1 of the steering angle θh and a second angle θh2 that is less than the first angle θh1 and that meet the following relationship.

The magnitude of the target steering angular speed ωh* at the time when the steering angle θh is the first angle θh1 is more than the magnitude of the target steering angular speed ωh* at the time when the steering angle θh is the second angle θh2. Alternatively, the target steering angular speed calculation process M44 may be a process of rendering the magnitude of the target steering angular speed ωh* at the time when the vehicle speed V is high equal to or more than the magnitude of the target steering angular speed ωh* at the time when the vehicle speed V is low, for example. In that case, there exist a first speed V1 of the vehicle speed V and a second speed V2 that is less than the first speed V1 and that meet the following relationship.

The magnitude of the target steering angular speed ωh* at the time when the vehicle speed V is the first speed V1 is more than the magnitude of the target steering angular speed ωh* at the time when the vehicle speed V is the second speed V2. The target steering angular speed calculation process M44 may be a process in which the PU 72 calculates the target steering angular speed ωh* through map calculation with map data stored in the storage device 74, for example. Here, the map data are a process that has the magnitude of the steering angle θh and the vehicle speed V as input variables and that has the target steering angular speed ωh* as an output variable.

A steering angular speed feedback process M48 is a process of substituting an amount of operation for controlling the steering angular speed ωh to the target steering angular speed ωh* through feedback control into the target reaction force Ts2*. The steering angular speed feedback process M48 may be a process of substituting an output value from a proportional element that receives the difference between the steering angular speed ωh and the target steering angular speed ωh* as an input into the target reaction force Ts2*, for example. Alternatively, the steering angular speed feedback process M48 may be a process of substituting the sum of an output value from the above proportional element and an output value of a differential element for the above difference into the target reaction force Ts2*, for example. Alternatively, the steering angular speed feedback process M48 may be a process of substituting the sum of an output value from the above proportional element, an output value of the above differential element, and an output value of an integral element for the above difference into the target reaction force Ts2*, for example. Alternatively, the steering angular speed feedback process M48 may be a process of substituting the sum of an output value of the above proportional element and an output value of the above integral element into the target reaction force Ts2*, for example.

A synthesized value calculation process M30a is a process of substituting a value obtained by adding the target reaction force Ts2* to the target reaction force Ts1* into the target reaction force Ts*.

<Functions and Effects of Second Embodiment>

The PU 72 substitutes an amount of operation for controlling the steering angular speed ωh to the target steering angular speed ωh* through feedback control into the target reaction force Ts2*. Then, the PU 72 determines the sum of the target reaction force Ts1* and the target reaction force Ts2* as the target reaction force Ts*. Consequently, the steering angular speed ωh is controlled to the target steering angular speed ωh*, even if the target reaction force Ts1* is no longer a value that is appropriate as torque to be applied to the steering wheel 12 as the driver takes his/her hands off the steering wheel 12. Consequently, the behavior of the steering wheel can be rendered appropriate, even when the driver takes his/her hands off the steering wheel.

With the present embodiment described above, the following functions and effects can be further obtained.

(2-1) The PU 72 sets the target steering angular speed ωh* according to the value of the steering angle θh.

Consequently, the steering angular speed ωh can be controlled to an appropriate speed according to the steering angle θh.

(2-2) The PU 72 calculates the base target torque Thb* according to the vehicle speed V. That is, the PU 72 calculates the target steering torque Th* according to the vehicle speed V. Meanwhile, the PU 72 calculates the target steering angular speed ωh* according to the vehicle speed V. That is, the PU 72 calculates the target reaction force Ts2* according to the vehicle speed V. Therefore, the target reaction force Ts2* can be set to an appropriate value that matches the vehicle speed V as a variable that is used to calculate the target steering torque Th*.

<Third Embodiment>

A third embodiment will be described below with reference to the drawings, focusing on the differences from the first and second embodiments.

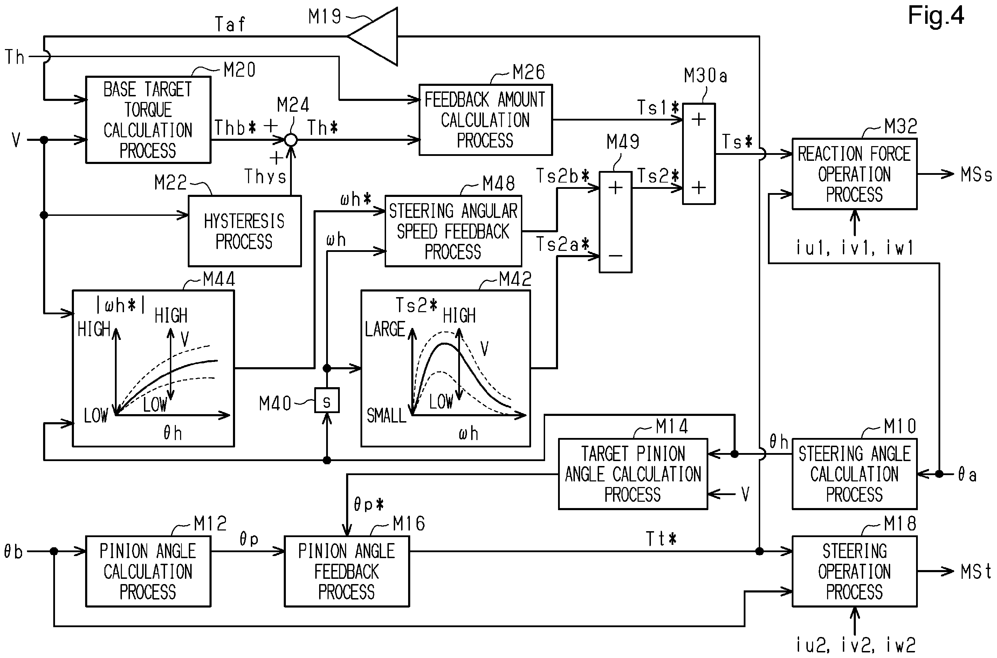

FIG. 4 illustrates a part of a process executed by the control device 70. In FIG. 4, the same reference numerals are given to processes corresponding to the processes illustrated in FIGS. 2 and 3 for convenience.

In the present embodiment, as illustrated in FIG. 4, an output of the damping process M42 is defined as a target reaction force Ts2a*. In the present embodiment, in addition, an output of the steering angular speed feedback process M48 is defined as a target reaction force Ts2b*.

A synthesis process M49 is a process of substituting a value obtained by subtracting the target reaction force Ts2a* from the target reaction force Ts2b* into the target reaction force Ts2*. A synthesized value calculation process M30a is a process of substituting a value obtained by adding the target reaction force Ts2* to the target reaction force Ts1* into the target reaction force Ts*.

<Fourth Embodiment>

A fourth embodiment will be described below with reference to the drawings, focusing on the differences from the third embodiment.

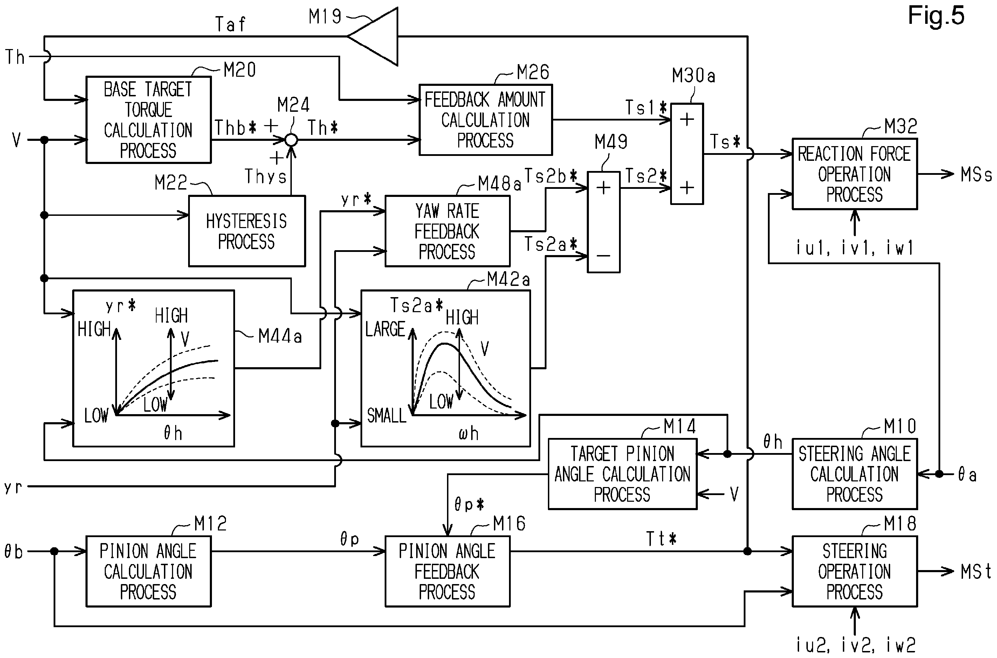

FIG. 5 illustrates a part of a process executed by the control device 70. In FIG. 5, the same reference numerals are given to processes corresponding to the processes illustrated in FIG. 4 for convenience. A target yaw rate calculation process M44a is a process of calculating a target yaw rate yr* according to the magnitude of the steering angle θh and the vehicle speed V. The target yaw rate calculation process M44a may be a process in which the PU 72 calculates the target yaw rate yr* through map calculation with map data stored in the storage device 74, for example. Here, the map data have the magnitude of the steering angle θh and the vehicle speed V as input variables, and have the target yaw rate yr* as an output variable.

A yaw rate feedback process M48a is a process of substituting an amount of operation for controlling the yaw rate yr to the target yaw rate yr* through feedback control into the target reaction force Ts2b*. The yaw rate feedback process M48a may be a process of substituting an output value from a proportional element that receives the difference between the yaw rate yr and the target yaw rate yr* as an input into the target reaction force Ts2b*, for example. Alternatively, the yaw rate feedback process M48a may be a process of substituting the sum of an output value from the above proportional element and an output value of a differential element for the above difference into the target reaction force Ts2b*, for example. Alternatively, the yaw rate feedback process M48a may be a process of substituting the sum of an output value from the above proportional element, an output value of the above differential element, and an output value of an integral element for the above difference into the target reaction force Ts2b*, for example. Alternatively, the yaw rate feedback process M48a may be a process of substituting the sum of an output value of the above proportional element and an output value of the above integral element into the target reaction force Ts2b*, for example.

<Fifth Embodiment>

A fifth embodiment will be described below with reference to the drawings, focusing on the differences from the first embodiment.

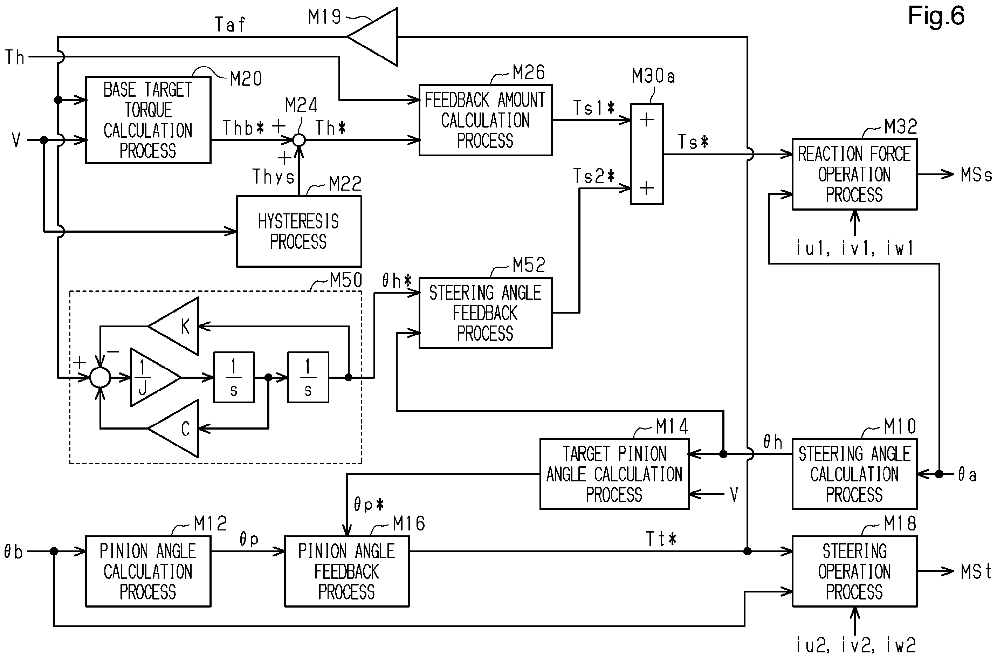

FIG. 6 illustrates a part of a process executed by the control device 70. In FIG. 6, the same reference numerals are given to processes corresponding to the processes illustrated in FIG. 2 for convenience. A target steering angle calculation process M50 is a process of calculating a target steering angle θh* using the axial force Taf as an input. The target steering angle calculation process M50 is a process of calculating the target steering angle θh* using a model equation expressed by the following equation (c1).

$$Taf = K \cdot \theta h^* + C \cdot \theta h^{*\prime} + J \cdot \theta h^{*\prime\prime} \cdots (c1)$$

The model expressed by the above equation (c1) is obtained by modeling a value indicated by the steering angle θh when torque in an amount that is equal to the axial force Taf is input to the steering shaft 14. This model assumes a virtual steering device in which the steering wheel 12 and the steered wheels are mechanically coupled to each other. A viscosity coefficient C in the above equation (c1) is obtained by modeling the friction etc. of the steering device. An inertia coefficient J in the above equation (c1) is obtained by modeling the inertia of the steering device. A spring constant K in the above equation (c1) is obtained by modeling the specifications of suspensions, wheel alignment, etc. of a vehicle on which the steering device is mounted.

A steering angle feedback process M52 is a process of substituting an amount of operation for controlling the steering angle θh to the target steering angle θh* through feedback control into the target reaction force Ts2*. The steering angle feedback process M52 may be a process of substituting an output value from a proportional element that receives the difference between the steering angle θh and the target steering angle θh* as an input into the target reaction force Ts2*, for example. Alternatively, the steering angle feedback process M52 may be a process of substituting the sum of an output value from the above proportional element and an output value of a differential element for the above difference into the target reaction force Ts2*, for example. Alternatively, the steering angle feedback process M52 may be a process of substituting the sum of an output value from the above proportional element, an output value of the above differential element, and an output value of an integral element for the above difference into the target reaction force Ts2*, for example. Alternatively, the steering angle feedback process M52 may be a process of substituting the sum of an output value of the above proportional element and an output value of the above integral element into the target reaction force Ts2*, for example.

A synthesized value calculation process M30a is a process of substituting the sum of the target reaction force Ts1* and the target reaction force Ts2* into the target reaction force Ts*.

<Functions and Effects of Fifth Embodiment>

The PU 72 substitutes an amount of operation for controlling the steering angle θh to the target steering angle θh* through feedback control into the target reaction force Ts2*. Then, the PU 72 determines the sum of the target reaction force Ts1* and the target reaction force Ts2* as the target reaction force Ts*. Consequently, the steering angle θh is controlled to the target steering angle θh*, even if the target reaction force Ts1* is no longer a value that is appropriate as torque to be applied to the steering wheel 12 as the driver takes his/her hands off the steering wheel 12. Consequently, the behavior of the steering wheel can be rendered appropriate, even when the driver takes his/her hands off the steering wheel.

With the present embodiment described above, the following functions and effects can be further obtained.

    (5-1) The PU 72 calculates the target steering angle θh* based on the above equation (c1).
    Consequently, the behavior of the steering wheel 12 can be adjusted using the viscosity coefficient C, the inertia coefficient J, and the spring constant K.

<Sixth Embodiment>

A sixth embodiment will be described below with reference to the drawings, focusing on the differences from the first embodiment.

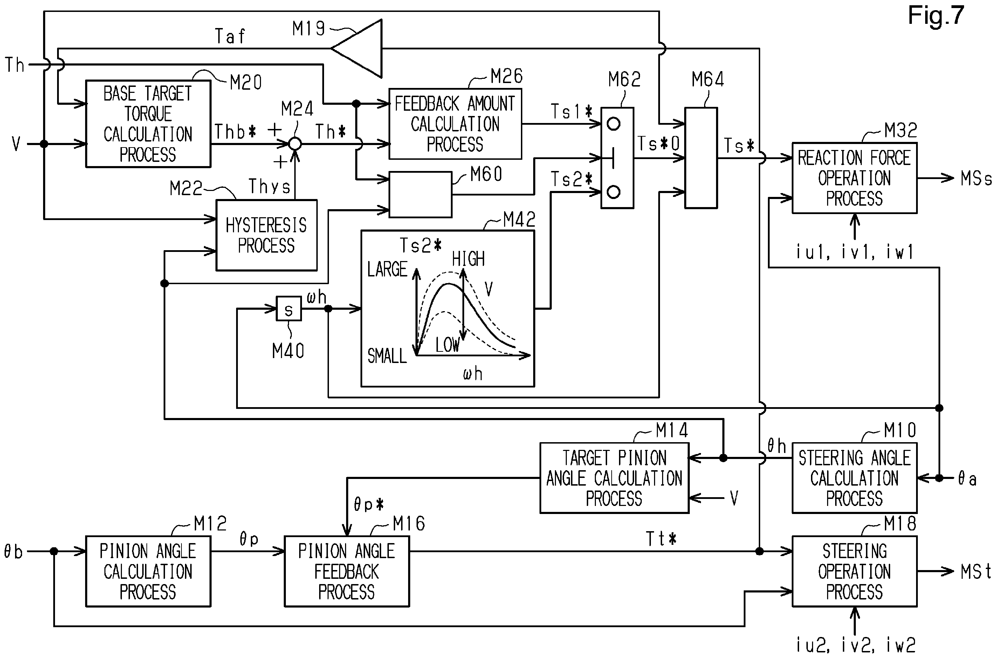

FIG. 7 illustrates a part of a process executed by the control device 70. In FIG. 7, the same reference numerals are given to processes corresponding to the processes illustrated in FIG. 2 for convenience. An operation state estimation process M60 is a process of estimating whether the driver is operating the steering wheel 12 using the steering torque Th and the steering angle θh as inputs. The operation state estimation process M60 may be a process of estimating whether the driver is operating the steering wheel 12 based on a magnitude comparison between the steering torque Th and a threshold, for example. In that case, the threshold may be set according to the steering angle θh. The operation state estimation process M60 may include a process of calculating a first-order time differential value of the steering angle θh. In that case, the operation state estimation process M60 is a process of estimating whether the driver is operating the steering wheel 12 in consideration of the steering angular speed.

A switching process M62 is a process of receiving the estimation result from the operation state estimation process M60 as an input and selectively outputting one of two inputs including the target reaction force Ts1* and the target reaction force Ts2*. The switching process M62 includes a process of substituting the target reaction force Ts1* into the target reaction force Ts*0 when it is estimated that the driver is operating the steering wheel 12. The switching process M62 includes a process of substituting the target reaction force Ts2* into the target reaction force Ts*0 when it is estimated that the driver is not operating the steering wheel 12.

A gradually changing process M64 is a process of gradually changing variations in the target reaction force Ts* when the target reaction force Ts*0 as an output from the switching process M62 is switched from one of two including the target reaction force Ts1* and the target reaction force Ts2* to the other. That is, the gradually changing process M64 is a process of causing the target reaction force Ts* to gradually transition from the target reaction force Ts1* to the target reaction force Ts2* when the output from the switching process M62 is switched from the target reaction force Ts1* to the target reaction force Ts2*. The gradually changing process M64 is also a process of causing the target reaction force Ts* to gradually transition from the target reaction force Ts2* to the target reaction force Ts1* when the output from the switching process M62 is switched from the target reaction force Ts2* to the target reaction force Ts1*.

The gradually changing speed in the gradually changing process M64 is variably set according to the vehicle speed V and the steering angular speed ωh.

<Functions and Effects of Sixth Embodiment>

The PU 72 switches which of the target reaction force Ts1* and the target reaction force Ts2* to adopt according to the result of the estimation as to whether the driver is operating the steering wheel 12. Consequently, the target reaction force Ts1* can be used as an instruction value for torque for the reaction force motor 20 when the driver is operating the steering wheel 12. Therefore, the steering torque Th can be controlled to the target steering torque Th* with high precision. Meanwhile, the PU 72 can use the target reaction force Ts2* as an instruction value for torque for the reaction force motor 20 when the driver is not operating the steering wheel 12. Therefore, the damping process M42 can be a process of determining an appropriate target reaction force Ts2* on the premise that the target reaction force Ts1* is not superimposed. Thus, it is possible both for the damping process M42 to determine an appropriate target reaction force Ts2* and to facilitate design of the damping process M42.

With the present embodiment described above, the following functions and effects can be further obtained.

(6-1) When the output from the switching process M62 is switched, the PU 72 causes the target reaction force Ts* to gradually transition from a first value as a value before the switching to a second value as a value after the switching through the gradually changing process M64. Consequently, abrupt variations in the target reaction force Ts* can be suppressed.

(6-2) The PU 72 receives not only the steering torque Th but also the steering angle θh as an input, and estimates whether the driver is operating the steering wheel 12. Consequently, the estimation precision can be enhanced compared to when an estimation is made based on the steering torque Th alone.

<Seventh Embodiment>

A seventh embodiment will be described below with reference to the drawings, focusing on the differences from the first embodiment.

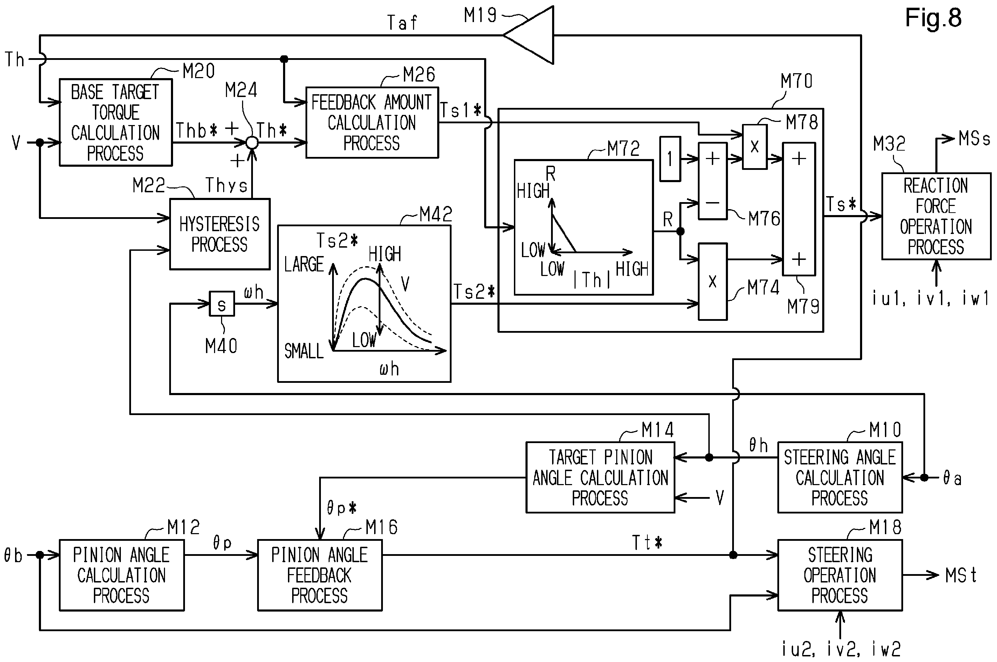

FIG. 8 illustrates a part of a process executed by the control device 70. In FIG. 8, the same reference numerals are given to processes corresponding to the processes illustrated in FIG. 2 for convenience. A contribution rate varying process M70 is a process of varying the respective rates of contribution of the target reaction force Ts1* and the target reaction force Ts2* to the target reaction force Ts*. More specifically, a contribution rate calculation process M72 is a process of calculating a contribution rate R using the steering torque Th as an input. The contribution rate R takes a value of "0" or more and "1" or less. The contribution rate R is a variable that indicates the rate of contribution of the target reaction force Ts2* to the target reaction force Ts*. The contribution rate calculation process M72 includes a process of rendering the contribution rate R at the time when the magnitude of the steering torque Th is large equal to or less than the contribution rate R at the time when the magnitude of the steering torque Th is small. In particular, the contribution rate calculation process M72 includes a process of setting the contribution rate R to "0" when the magnitude of the steering torque Th is equal to or more than a predetermined value. The contribution rate calculation process M72 may be a process in which the PU 72 calculates the contribution rate R through map calculation with map data stored in the storage device 74. Here, the map data have the steering torque Th as an input variable, and have the contribution rate R as an output variable.

A multiplication process M74 is a process of multiplying the target reaction force Ts2* by the contribution rate R. A second contribution rate calculation process M76 is a process of outputting "1 - R" as a value obtained by subtracting the contribution rate R from "1". The value "1 - R" is defined as a second contribution rate. The second contribution rate is a variable that indicates the rate of contribution of the target reaction force Ts1* to the target reaction force Ts*. A multiplication process M78 is a process of multiplying the target reaction force Ts1* by the contribution rate R. An addition process M79 is a process of substituting the sum of an output value from the multiplication process M74 and an output value from the multiplication process M78 into the target reaction force Ts*.

Consequently, the target reaction force Ts* is obtained as follows.

$$Ts* = (1 - R) \cdot Ts1* + R \cdot Ts2*$$

<Functions and Effects of Seventh Embodiment>

The PU 72 calculates the respective contribution rates R, 1 - R of the target reaction force Ts1* and the target reaction force Ts2* to the target reaction force Ts* according to the magnitude of the steering torque Th. Then, the value "(1 - R).Ts1* + R.Ts2*" is substituted into the target reaction force Ts*. Consequently, torque of the reaction force motor 20 can be set to the target reaction force Ts1* when torque applied to the steering wheel 12 by the driver is large. Therefore, the steering torque Th can be controlled to the target steering torque Th* with high precision. When torque applied to the steering wheel 12 by the driver is small, meanwhile, the PU 72 can use the target reaction force Ts2* as an instruction value for torque for the reaction force motor 20. Therefore, the damping process M42 can be a process of determining an appropriate target reaction force Ts2* on the premise that the effect of the target reaction force Ts* is small. Thus, it is possible both for the damping process M42 to determine an appropriate target reaction force Ts2* and to facilitate design of the damping process M42.

<Eighth Embodiment>

An eighth embodiment will be described below with reference to the drawings, focusing on the differences from the sixth embodiment.

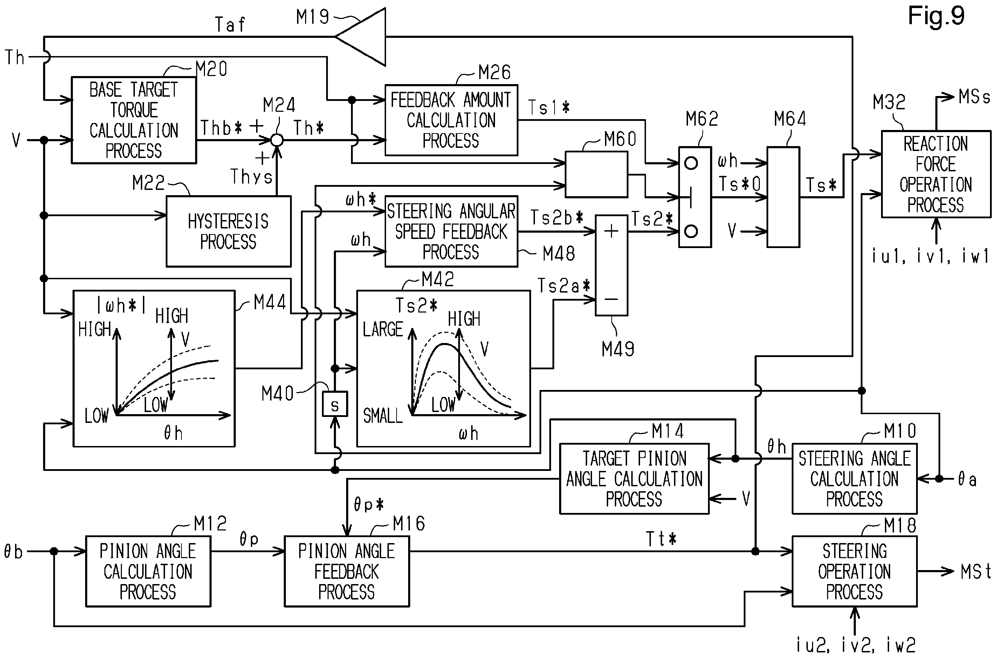

FIG. 9 illustrates a part of a process executed by the control device 70. In FIG. 9, the same reference numerals are given to processes corresponding to the processes illustrated in FIGS. 4 and 7 for convenience.

In the present embodiment, as illustrated in FIG. 9, as in the process in FIG. 4, the target reaction force Ts2* is determined as a value obtained by subtracting the target reaction force Ts2a* from the target reaction force Ts2b*. As illustrated in FIG. 7, however, the PU 72 executes the operation state estimation process M60, the switching process M62, and the gradually changing process M64.

<Ninth Embodiment>

A ninth embodiment will be described below with reference to the drawings, focusing on the differences from the sixth embodiment.

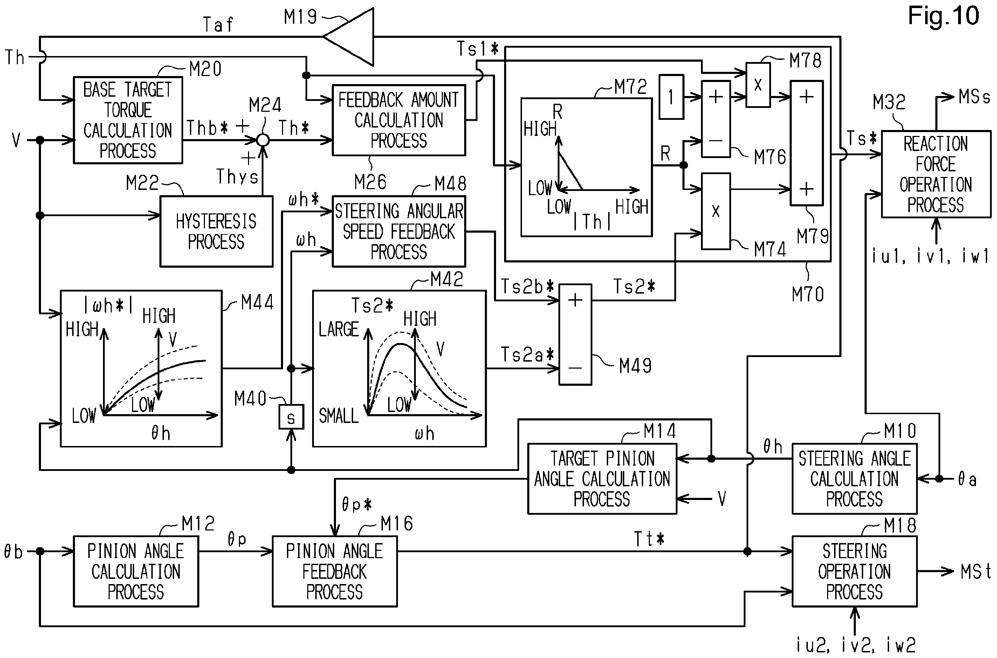

FIG. 10 illustrates a part of a process executed by the control device 70. In FIG. 10, the same reference numerals are given to processes corresponding to the processes illustrated in FIGS. 4 and 8 for convenience.

In the present embodiment, as illustrated in FIG. 10, as in the process in FIG. 4, the target reaction force Ts2* is determined as a value obtained by subtracting the target reaction force Ts2a* from the target reaction force Ts2b*. As illustrated in FIG. 8, however, the PU 72 executes the contribution rate varying process M70.

<Tenth Embodiment>

A tenth embodiment will be described below with reference to the drawings, focusing on the differences from the sixth embodiment.

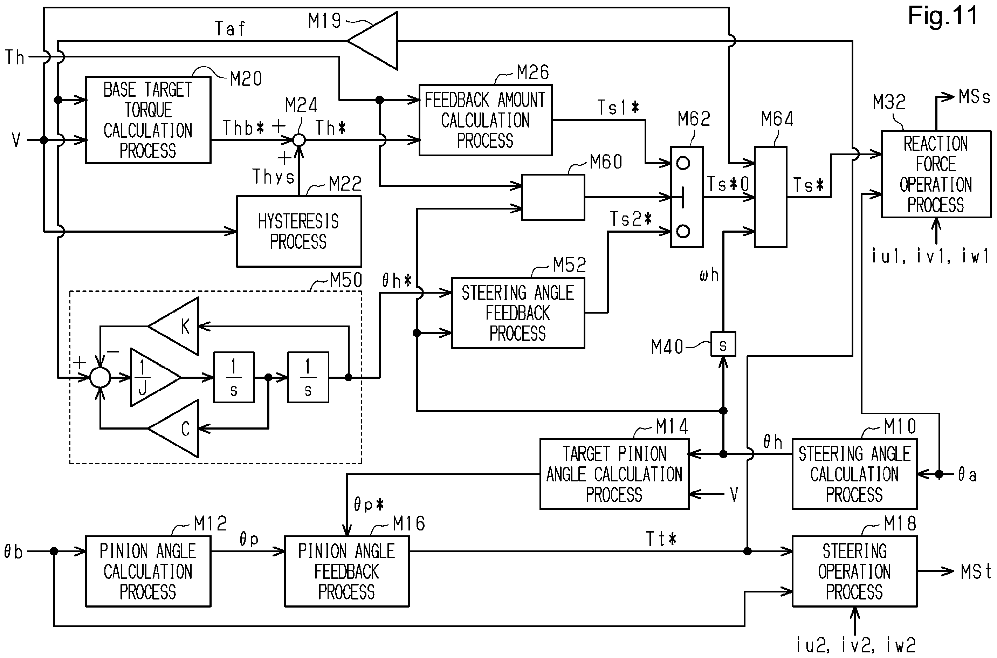

FIG. 11 illustrates a part of a process executed by the control device 70. In FIG. 11, the same reference numerals are given to processes corresponding to the processes illustrated in FIGS. 6 and 7 for convenience.

In the present embodiment, as illustrated in FIG. 11, as in the process in FIG. 6, the target reaction force Ts2* is determined as an output value from the steering angle feedback process M52. As illustrated in FIG. 7, however, the PU 72 executes the operation state estimation process M60, the switching process M62, and the gradually changing process M64.

<Eleventh Embodiment>

An eleventh embodiment will be described below with reference to the drawings, focusing on the differences from the sixth embodiment.

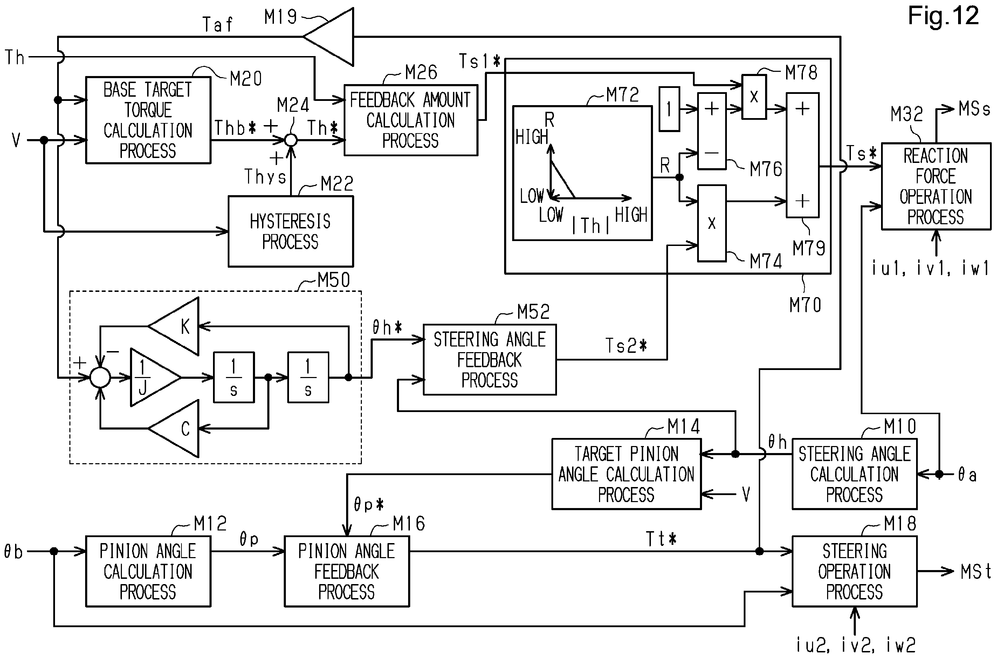

FIG. 12 illustrates a part of a process executed by the control device 70. In FIG. 12, the same reference numerals are given to processes corresponding to the processes illustrated in FIGS. 6 and 8 for convenience.

In the present embodiment, as illustrated in FIG. 12, as in the process in FIG. 6, the target reaction force Ts2* is determined as an output value from the steering angle feedback process M52. As illustrated in FIG. 8, however, the PU 72 executes the contribution rate varying process M70.

<Other Embodiments>

The embodiments can be modified and carried out as follows. The embodiments and the following modifications can be combined as long as no technical contradiction arises.

[Turning Speed Variable]

· The turning speed variable as a variable that indicates the rotational speed of the motor or the yaw rate is not limited to the steering angular speed ωh or the yaw rate yr. For example, the turning speed variable may be a first-order time differential value of the rotational angle θa. Alternatively, a detection value from a sensor that detects a rotation angular speed may be used instead of calculating a first-order time differential value using the rotational angle θa.

[Damping Process]

· The damping process is not limited to a process that receives the value of the turning speed variable and the vehicle speed V as inputs. For example, the damping process may be a process that receives the value of the turning speed variable as an input but does not receive the vehicle speed V as an input.

[Turning Speed Feedback Process]

· The turning speed feedback process is not limited to the steering angular speed feedback process M48 or the yaw rate feedback process M48a. For example, the turning speed feedback process may be a process of receiving a first-order time differential value of the rotational angle θa and controlling the time differential value to a target value through feedback control.

[Target Turning Angular Speed Variable Calculation Process]

· It is not essential that the target turning angular speed variable calculation process should receive the vehicle speed V and the steering angle θh as inputs. For example, the target turning angular speed variable calculation process may receive the steering angle θh as an input, but may not receive the vehicle speed V as an input.

[Value of Target Steering Variable]

· The model equation for calculating the target steering angle θh* as a value of the target steering variable is not limited to the above equation (c1). For example, a model obtained by removing the term "K·θh*" from the above equation (c1) may be used. Alternatively, a model obtained by removing the term "C·θh*" from the above equation (c1) may be used, for example.

. The target steering angle calculation process M50 may receive the target reaction force Ts* as an input in place of the steering torque instruction value Tt*.

· The process of calculating a value of the target steering variable is not limited to a process based on a model equation. For example, map calculation may be used.

[Operation State of Operation Member]

· The process of grasping the operation state of the operation member is not limited to the operation state estimation process M60. For example, a process of grasping the operation state based on the steering torque Th alone may be used.

[Gradually Changing Process]

· It is not essential that the gradually changing speed should be variably set according to the vehicle speed V and the steering angular speed ωh in the gradually changing process. For example, the gradually changing speed may be variably set according to the vehicle speed V, but may not be variably set according to the steering angular speed ωh. Alternatively, the gradually changing speed may be variably set according to the steering angular speed ωh, but may not be variably set according to the vehicle speed V, for example. Alternatively, the gradually changing process may not be variably set according to at least one of the vehicle speed V and the steering angular speed ωh.

[Switching Process]

· It is not essential that the gradually changing process M64 should be executed when executing the switching process M62.

[Gain for Control]

· When executing a process of varying the contribution rate R of the target reaction force Ts2* to the target reaction force Ts*, the gain for various control may be changed accordingly. That is, the gain for the feedback amount calculation process M26 may be variably set, for example. In addition, the gain for the steering angular speed feedback process M48 may be variably set, for example. In addition, the gain for the yaw rate feedback process M48a may be variably set, for example. In addition, the gain for the steering angle feedback process M52 may be variably set, for example.

The process of variably setting the gain is not limited to the case where the contribution rate varying process M70 is executed. For example, the gain may be variably set according to the state of operation by the driver when an output value from the synthesized value calculation process M30, M30a is used as the target reaction force Ts*. Here, the variable that indicates the operation state to be input to the process of variably setting the gain is one that makes it possible to identify whether the driver is operating the steering wheel 12 or the driver is not operating the steering wheel 12. This variable may take three or more values, as with the magnitude of the steering torque Th.

[Automatic Control Calculation Process]

· While the damping process to which the yaw rate yr is input is combined with the yaw rate feedback process M48a in FIG. 5, this is not limiting. For example, the damping process M42a and the steering angular speed feedback process M48 may be combined with each other. Alternatively, the damping process M42 and the yaw rate feedback process M48a may be combined with each other.

[Use of Automatic Control Calculation Process]

· The use of the automatic control calculation process is not limited to use to calculate an amount of operation when the driver takes his/her hands off the steering wheel 12. For example, the automatic control calculation process may be used to control the steering angle θh when the steering wheel 12 is caused to transition from a retracted state to a state in which the steering wheel 12 is easily operable by the driver.

[Torque Control Process]

· The method of controlling the reaction force motor 20 is not limited to a dq-axis current feedback process. For example, it is only necessary that the current that flows through the reaction force motor 20 should be simply controlled when a direct-current motor is adopted as the reaction force motor 20 and an H-bridge circuit is used as the drive circuit.

[Required Torque Variable]

· The required torque variable is not limited to the target reaction force Ts*. In other words, the required torque variable is not limited to a target value for torque for the reaction force motor 20. For example, the required torque variable may be an instruction value for a q-axis current when the reaction force motor 20 is a surface permanent magnet synchronous motor. When the reaction force motor 20 is an interior permanent magnet synchronous motor, meanwhile, the required torque variable may be a set of an instruction value for a d-axis current and an instruction value for a q-axis current.

. The required torque variable is not limited to a variable that indicates a reaction force to be applied to the steering wheel 12. For example, in the case of a device that enables power transfer between the steering wheel 12 and the steered wheels 44 as described in the [Steering System] section below, the required torque variable is a variable that indicates torque that assists torque applied to the steering wheel 12 by the driver.

[Control for Steered Angle]

· A process of controlling a detection value of the amount of movement of the steered shaft 40 to a target value through feedback control may be used in place of the pinion angle feedback process M16. In this case, the control amount etc. about the pinion angle θp in the above embodiments is replaced with the control amount etc. about the amount of movement of the steered shaft 40.

. It is not essential that control for the steered angle should include a process of calculating an amount of operation for controlling the control amount that indicates the steered angle such as the pinion angle θp through feedback control. For example, control for the steered angle may include a process of calculating an amount of operation for controlling the control amount that indicates the steered angle to a target value through open-loop control. Alternatively, control for the steered angle may include a process of calculating the sum of an amount of operation for open-loop control and an amount of operation for feedback control.

. The method of controlling the steering motor 60 is not limited to a dq-axis current feedback process. For example, it is only necessary that the current that flows through the steering motor 60 should be simply controlled when a direct-current motor is adopted as the steering motor 60 and an H-bridge circuit is used as the drive circuit.

[Operation Member]

The operation member to be operated by the driver to steer the vehicle is not limited to the steering wheel 12. For example, the operation member may be a joystick.

[Motor Mechanically Coupled to Operation Member]

(a) Reaction Force Actuator Ar

· The reaction force motor 20 mechanically coupled to the steering wheel 12 is not limited to a three-phase brushless motor. For example, the reaction force motor 20 may be a brushed direct-current motor.

(b) Drive Circuit for Motor

· The drive circuit for the motor mechanically coupled to the operation member is not limited to the reaction force inverter 22. For example, the drive circuit may be an H-bridge circuit.

(c) Others

· It is not essential that the speed reduction mechanism 16 should be provided.

[Steering Control Device]

· The steering control device is not limited to one that includes the PU 72 and the storage device 74 and that executes software processing. For example, the steering control device may include a dedicated hardware circuit such as an ASIC that executes at least a part of the processes executed in the above embodiments. That is, the control device may include a processing circuit with any of the following configurations (a) to (c). (a) A processing circuit including: a processing device that executes all of the above processes according to a program; and a program storage device such as a storage device that stores the program. (b) A processing circuit including: a processing device that executes a part of the above processes according to a program; a program storage device; and a dedicated hardware circuit that executes the rest of the processes. (c) A processing circuit including a dedicated hardware circuit that executes all of the above processes. Here, there may be a plurality of software execution devices that includes a processing device and a program storage device. In addition, there may be a plurality of dedicated hardware circuits.

[Steering Actuator]

· The steering actuator At may be one in which the steering motor 60 is disposed coaxially with the steered shaft 40, for example. Alternatively, the steering actuator At may be one coupled to the steered shaft 40 via a belt-type speed reducer that uses a ball screw mechanism, for example.

. The steering actuator At is not limited to being configured to drive the right steered wheel 44 and the left steered wheel 44 in conjunction with each other. In other words, the steering actuator At may be able to control the right steered wheel 44 and the left steered wheel 44 independently of each other.

[Steering Device]

· The steering device capable of changing the relationship between the steering angle and the steered angle is not limited to a steering system in which power transfer between the steering wheel 12 and the steered wheels 44 is disconnected. For example, the steering device may be configured to be able to change the relationship between the steering angle and the steered angle by using a variable gear for a gear that enables power transfer between the steering wheel 12 and the steered wheels 44. Further, the steering device is not limited to a steering device capable of changing the relationship between the steering angle and the steered angle. For example, the steering device may be a steering device in which the steering wheel 12 and the steered wheels 44 are mechanically coupled to each other.

**Claims**

1. A steering control device configured to operate a motor mechanically coupled to an operation member that is operated by a driver to steer a vehicle, wherein:

   the steering control device is configured to execute a torque control process, a feedback amount calculation process, and an automatic control calculation process;
   the torque control process is a process of controlling torque of the motor according to a value of a required torque variable;
   the required torque variable is a variable that indicates a target value for the torque of the motor;
   the feedback amount calculation process is a process of calculating a value of the required torque variable in order to control steering torque to target steering torque through feedback control;
   the steering torque is torque to be input to the operation member; and
   the automatic control calculation process is a process of calculating a value of the required torque variable for displacing the operation member separately from an operation of the operation member by the driver.

2. The steering control device according to claim 1, wherein:

   the automatic control calculation process includes a damping process of calculating a value of the required torque variable according to a value of a turning speed variable; and
   the turning speed variable is a variable that indicates a rotational speed of the motor or a yaw rate of the vehicle.

3. The steering control device according to claim 2, wherein the value of the required torque variable to be input to the torque control process is a value synthesized from the value of the required torque variable calculated through the feedback amount calculation process and the value of the required torque variable calculated through the automatic control calculation process.

4. The steering control device according to claim 3, wherein:

the steering control device is configured to execute a target steering torque calculation process;
the target steering torque calculation process is a process of calculating the target steering torque according to a value of a vehicle speed variable;
the vehicle speed variable is a variable that indicates a travel speed of the vehicle; and
the damping process is a process of calculating a value of the required torque variable according to the value of the turning speed variable and the value of the vehicle speed variable.

5. The steering control device according to any one of claims 2 to 4, wherein:

the automatic control calculation process includes, in addition to the damping process, a turning speed feedback process of calculating a value of the required torque variable as an amount of operation for controlling the value of the turning speed variable to a value of a target turning speed variable through feedback control; and
the turning speed variable is a variable that indicates a rotational speed of the motor or a yaw rate of the vehicle.

6. The steering control device according to claim 1, wherein:

the automatic control calculation process includes a turning speed feedback process of calculating a value of the required torque variable as an amount of operation for controlling a value of a turning speed variable to a value of a target turning speed variable through feedback control; and
the turning speed variable is a variable that indicates a rotational speed of the motor or a yaw rate of the vehicle.

7. The steering control device according to claim 5 or 6, wherein:

the steering control device is configured to execute a target turning speed calculation process;
the target turning speed calculation process is a process of calculating a value of the target turning speed variable according to a value of a steering variable; and

the steering variable is a variable that indicates an amount of displacement of the operation member.

8. The steering control device according to any one of claims 5 to 7, wherein the value of the required torque variable to be input to the torque control process is a value synthesized from the value of the required torque variable calculated through the feedback amount calculation process and the value of the required torque variable calculated through the automatic control calculation process.

9. The steering control device according to claim 8, wherein:

the steering control device is configured to execute a target turning speed calculation process;
the target turning speed calculation process is a process of calculating a value of the target turning speed variable according to a value of a vehicle speed variable; and
the vehicle speed variable is a variable that indicates a travel speed of the vehicle.

10. The steering control device according to claim 1, wherein:

the automatic control calculation process includes a steering feedback process of calculating a value of the required torque variable as an amount of operation for controlling a value of a steering variable to a value of a target steering variable through feedback control; and
the steering variable is a variable that indicates an amount of displacement of the operation member.

11. The steering control device according to any one of claims 1, 2, 4, 5, and 7, wherein:

the steering control device is configured to execute a switching process; and
the switching process is a process of switching, according to an operation state of the operation member, the value of the required torque variable to be input to the torque control process to one of two values including the value of the required torque variable calculated through the feedback amount calculation process and the value of the required torque variable calculated through the automatic control calculation process.

12. The steering control device according to claim 11, wherein:

the steering control device is configured to execute a gradually changing process; and
the gradually changing process is a process of causing the value of the required torque variable to be input to the torque control process to gradually transition from a first value to a second value of two values including the value of the required torque variable calculated through the feedback amount calculation process and the value of the required torque variable calculated through the automatic control calculation process when the value of the required torque variable to be input to the torque control process is switched from the first value to the second value through the switching process.

13. The steering control device according to any one of claims 1, 2, 4, 5, and 7, wherein:

the steering control device is configured to execute a contribution rate varying process;
the contribution rate varying process is a process of receiving a value of a steering torque variable as an input and changing respective rates of contribution of the value of the required torque variable calculated through the feedback amount calculation process and the value of the required torque variable calculated through the automatic control calculation process to the value of the required torque variable to be input to the torque control process;
the steering torque variable is a variable that indicates steering torque; and
the steering torque is torque to be applied to the operation member.

14. The steering control device according to any one of claims 1 to 13, wherein the steering control device is configured to execute the torque control process with the operation member and steered wheels of the vehicle mechanically disconnected from each other.

15. A steering control method of operating a motor mechanically coupled to an operation member that is operated by a driver to steer a vehicle, the steering control method comprising executing a torque control process, executing a feedback amount calculation process, and executing an automatic control calculation process, wherein:

the torque control process is a process of controlling torque of the motor according to a value of a required torque variable;
the required torque variable is a variable that indicates a target value for the torque of the motor;
the feedback amount calculation process is a process of calculating a value of the required torque variable in order to control steering torque to target steering torque through feedback control;
the steering torque is torque to be input to the operation member; and
the automatic control calculation process is a process of calculating a value of the required torque variable for displacing the operation member separately from an operation of the operation member by the driver.

## Fig.1

Fig.2

Fig.3

EP 4 474 247 A1

Fig.4

Fig.5

Fig.6

Fig.7

Fig.8

REACTION FORCE OPERATION PROCESS — MSs
M32
iu1, iv1, iw1

Ts*
M70
M78 +
× M76
+ 1 −
M72 R
M74 ×
M79

R HIGH
LOW
LOW |Th| HIGH

M19
Taf

Ts1*
M26 FEEDBACK AMOUNT CALCULATION PROCESS

Th*
M24 +
Thb* + Thys
M20 M22 HYSTERESIS PROCESS

BASE TARGET TORQUE CALCULATION PROCESS

Th
V

Ts2*
M42
Ts2* HIGH V LOW
LARGE
SMALL
ωh

s ωh
M40

STEERING ANGLE CALCULATION PROCESS
M10
θa

θh

TARGET PINION ANGLE CALCULATION PROCESS
M14
V

STEERING OPERATION PROCESS — MSt
M18
iu2, iv2, iw2

Tt*

θp*
PINION ANGLE FEEDBACK PROCESS
M16
θp

PINION ANGLE CALCULATION PROCESS
M12
θb

23

Fig.9

Fig.10

Fig.11

Fig.12

M32 REACTION FORCE OPERATION PROCESS → MSs
iu1, iv1, iw1

M10 STEERING ANGLE CALCULATION PROCESS
θa

M18 STEERING OPERATION PROCESS → MSt
iu2, iv2, iw2

M78 +  M79 + M70
M76 −
M74 x
M72
1
R
HIGH LOW
LOW |Th| HIGH
R HIGH

Ts*
Ts1*

M26 FEEDBACK AMOUNT CALCULATION PROCESS

Ts2*
M52 STEERING ANGLE FEEDBACK PROCESS

M14 TARGET PINION ANGLE CALCULATION PROCESS
V
Tt*

θh
θh*

M19
Taf

M20 BASE TARGET TORQUE CALCULATION PROCESS
Thb*
M24 + Th*
M22 HYSTERESIS PROCESS
Thys

M50
1/s
1/s
K
C
1/J
−
+

θp*
M16 PINION ANGLE FEEDBACK PROCESS
θp
M12 PINION ANGLE CALCULATION PROCESS
θb

Th
V

## INTERNATIONAL SEARCH REPORT

International application No.

**PCT/JP2022/004259**

### A. CLASSIFICATION OF SUBJECT MATTER

***B62D 6/00***(2006.01)i; ***B62D 5/04***(2006.01)i
FI: B62D6/00; B62D5/04

According to International Patent Classification (IPC) or to both national classification and IPC

### B. FIELDS SEARCHED

Minimum documentation searched (classification system followed by classification symbols)

B62D6/00; B62D5/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-138333 A (JTEKT CORP.) 16 September 2021 (2021-09-16) paragraphs [0019]-[0120], fig. 1-10 | 1-15 |
| A | JP 2021-115999 A (JTEKT CORP.) 10 August 2021 (2021-08-10) paragraphs [0026]-[0109], fig. 1-9 | 1-15 |
| A | JP 2020-203499 A (JTEKT CORP.) 24 December 2020 (2020-12-24) paragraphs [0020]-[0089], fig. 1-6 | 1-15 |
| A | JP 2020-179833 A (JTEKT CORP.) 05 November 2020 (2020-11-05) paragraphs [0019]-[0080], fig. 1-4 | 1-15 |
| A | JP 2020-179832 A (JTEKT CORP.) 05 November 2020 (2020-11-05) paragraphs [0018]-[0092], fig. 1-7 | 1-15 |
| A | JP 2020-179831 A (JTEKT CORP.) 05 November 2020 (2020-11-05) paragraphs [0021]-[0112], fig. 1-11 | 1-15 |
| A | JP 2020-179830 A (JTEKT CORP.) 05 November 2020 (2020-11-05) paragraphs [0020]-[0105], fig. 1-8 | 1-15 |

☑ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 April 2022** | **19 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/004259**

**C.    DOCUMENTS CONSIDERED TO BE RELEVANT**

| Category* | Citation of document, with indication, where appropriate, of the relevant passages | Relevant to claim No. |
|---|---|---|
| A | JP 2020-163993 A (JTEKT CORP.) 08 October 2020 (2020-10-08) paragraphs [0031]-[0171], fig. 1-21 | 1-15 |
| A | WO 2014/115234 A1 (NISSAN MOTOR CO., LTD.) 31 July 2014 (2014-07-31) paragraphs [0008]-[0131], fig. 1-35 | 1-15 |

Form PCT/ISA/210 (second sheet) (January 2015)

**INTERNATIONAL SEARCH REPORT**
Information on patent family members

International application No.

**PCT/JP2022/004259**

| Patent document cited in search report | | | Publication date (day/month/year) | Patent family member(s) | | | Publication date (day/month/year) |
|---|---|---|---|---|---|---|---|
| JP | 2021-138333 | A | 16 September 2021 | EP CN US paragraphs [0029]-[0129], fig. 1-15 | 3878714 113371058 2021/0276610 | A1 A A1 | |
| JP | 2021-115999 | A | 10 August 2021 | EP CN US paragraphs [0036]-[0138], fig. 1-9 | 3871951 113247084 2021/0229739 | A1 A A1 | |
| JP | 2020-203499 | A | 24 December 2020 | (Family: none) | | | |
| JP | 2020-179833 | A | 05 November 2020 | EP CN US paragraphs [0023]-[0085], fig. 1-4 | 3733481 111845915 2020/0339188 | A1 A A1 | |
| JP | 2020-179832 | A | 05 November 2020 | (Family: none) | | | |
| JP | 2020-179831 | A | 05 November 2020 | EP CN US paragraphs [0033]-[0125], fig. 1-11 | 3730383 111845914 2020/0339187 | A1 A A1 | |
| JP | 2020-179830 | A | 05 November 2020 | EP CN US paragraphs [0028]-[0114], fig. 1-8 | 3730382 111845917 2020/0339186 | A1 A A1 | |
| JP | 2020-163993 | A | 08 October 2020 | (Family: none) | | | |
| WO | 2014/115234 | A1 | 31 July 2014 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014223832 A